# EUROPEAN PATENT APPLICATION

(11) **EP 1 580 574 A2**
(43) Date of publication of application: **28.09.2005**
(21) Application number: 04022165.7
(22) Date of filing: 17.09.2004
(51) Int. Cl.: G01T 1/02

(54) **Rack and a block for housing dosimeters**

(30) Priority: 26.02.2004 JP 2004051880
(71) Applicant: Fuji Electric Systems Co., Ltd., Tokyo, 102-0075 (JP)
(72) Inventor: Masui, Kaoru Fuji Electric Systems Co. Ltd., Tokyo 102-0075 (JP); Kobayashi, Hironobu Fuji Electric Systems Co. Ltd., Tokyo 102-0075 (JP)
(74) Representative: Hoffmann, Eckart

(57) **Abstract**

A rack for housing dosimeters according to the present invention comprises blocks (27)having an external shape of a rectangular solid in which a housing space is formed for housing a dosimeter (23) inserted through an entry (27a). A block (27) comprises at least one of a projection and a concavity being fitted to each other on at least one of top, bottom, left, and right external surfaces of the block. A plurality of the blocks (27) are combined in at least one of vertical and horizontal directions by fitting the projection and the concavity formed on the blocks (27). Peripheral side faces of the combined structure are covered and fastened by a frame cover (29).

## Description

The present invention relates to a device for housing and storing dosimeters. Dosimeters are for personal use and are carried by workers entering into a radiation controlled area in a nuclear power plant or the like.

JP-A-2003-167055 discloses a rack for housing dosimeters as shown in Fig. 10. The rack 11 has an overall shape of a rectangular solid, and has a number of entries 15 for the dosimeters arranged in a matrix in the horizontal and the vertical direction. A dosimeter 13 is inserted through an entry and housed in a housing space. JP-A-10-332830 also discloses a rack 19 as shown in Fig. 11 with a matrix like arrangement of entries 17 for receiving dosimeters.

The conventional racks for housing dosimeters as disclosed in JP-A-2003-167055 and JP-A-10-332830, however, involve a problem as follows. The number of dosimeters to be housed in a rack varies for example, from 10 to 200 corresponding to the number of dosimeters used at a particular site. The shape of the rack is has to vary correspondingly for example, horizontally or vertically prolonged depending on the location of installation. Accordingly, a rack must be newly designed and manufactured every installation occasion to meet requirements of the number of dosimeters to accommodate and the installation location. This situation raises a problem of lots of costs for design and manufacture.

An object of the present invention is to provide a device for housing dosimeters that allows overcoming the problems explained above and, more particularly, allows for easy adaptation to the number of dosimeters to be housed and to the installation location, and that can be manufactured at a low cost.

This object is achieved by a rack as claimed in claim 1 and a block for use in the rack as claimed in claim 11. Preferred embodiments of the invention are subject-matter of the dependent claims.

A rack for housing dosimeters according to the claimed structure can be constructed by only combining a desired number of blocks, each block for housing one dosimeter, fitting the projection(s) and the concavity(ies) in a vertical and/or a horizontal direction. Therefore, a rack suited to the number of dosimeters to be accommodated can be easily manufactured. A rack having a vertically or horizontally oblong shape suited to the installation location can also be manufactured easily. Since a rack is manufactured by only combining blocks that are manufactured at a low cost, a rack that is suited to the required number of dosimeters and to the installation location can be manufactured at a low cost.

As described above, the present invention allows manufacturing, at a low cost, a rack for housing dosimeters that meets requirements of the number of dosimeters for service and the location of installation.

Preferred embodiments of the present invention will be described in detail in the following with reference to the accompanying drawings, in which:
- Fig. 1: shows the structure of a rack for housing dosimeters of a first embodiment according to the invention;
- Fig. 2: shows the structure of the blocks in the rack of Fig. 1;
- Fig. 3: shows alternative means to switch off the power supply of a dosimeter inserted into the housing space of a block, wherein (a) indicates a first alternative using a magnet, and (b) indicates a second alternative using a projecting bar;
- Fig. 4: shows the structure of a sliding frame cover of a rack according to an embodiment of the invention, wherein (a) shows the whole construction of the frame cover and (b) is a sectional view along the line A-A in (a);
- Fig. 5: shows a joining plate for fastening a structure combining a plurality of blocks;
- Fig. 6: shows the structure of the blocks according to a first variation of the first embodiment;
- Fig. 7: shows a die for manufacturing the blocks of the first variation;
- Fig. 8: shows the structure of the blocks according to a second variation of the first embodiment;
- Fig. 9: shows the structure of a rack according to a second embodiment of the invention;
- Fig. 10: shows the structure of a conventional rack for housing dosimeters; and

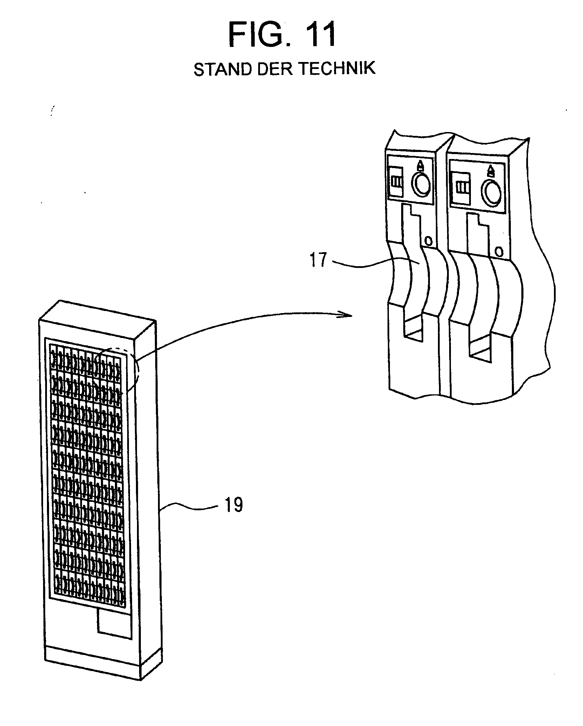

- Fig. 11: shows the structure of another conventional rack for housing dosimeters.

### First embodiment

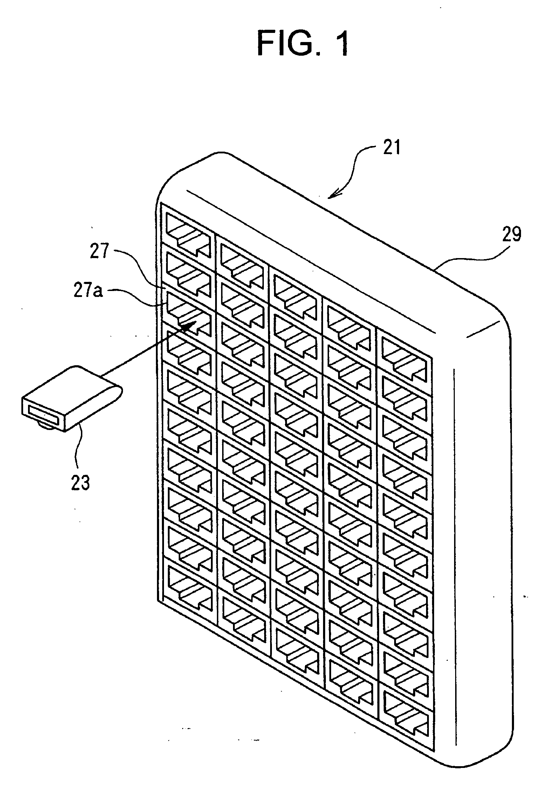

Fig. 1 shows the structure of a rack for housing dosimeters according to an embodiment of the present invention.

The rack 21 shown in Fig. 1 is constructed by arranging a required number of blocks 27 in two directions perpendicular to each other (the horizontal direction and the vertical direction as viewed in the drawing) to form a desired overall shape and by fixing the thus obtained matrix of blocks by covering the four side surfaces of this block matrix (the top, bottom, left, and right surfaces as viewed in the drawing) with a frame cover 29.

Each block 27 has a rectangular solid shape and houses a dosimeter 23 inserted through an entry 27a. The number of blocks 27 in this embodiment is 50 to accommodate 50 dosimeters 23. Ten blocks in the rack are arranged in the vertical direction and five in the horizontal direction to be suited to the installation location of the rack. The rectangular solid shape of a block 27 is understood to include any solid shape exhibiting a rectangular projected plane such as an approximately rectangular solid shape, a cubic shape, and an approximately cubic shape.

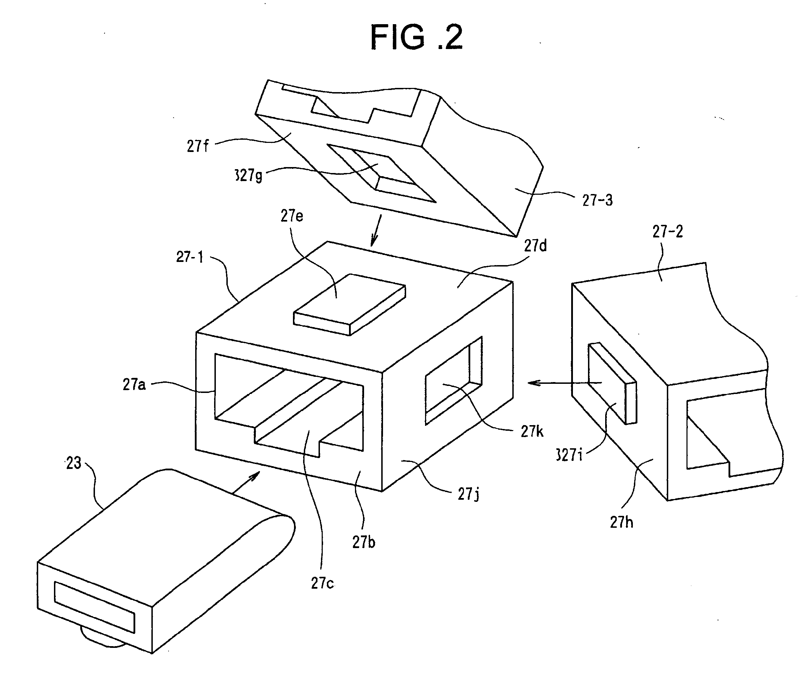

Referring to Fig. 2. each block 27 (three of the blocks denoted 27-1, 27-2, and 27-3 are shown) has an entry 27a opened in a front surface 27b for inserting a dosimeter 23 and housing it in a hollow housing space 27c. A projection 27e is formed in the center of the top surface 27d, a concavity or recess 27g is formed in the center of the bottom surface 27f, a projection 27i is formed in the center of the left surface 27h, and a concavity or recess 27k is formed in the center of the right surface 27j.

The projection 27e in the top surface 27d and the concavity 27g in the bottom surface 27f are formed with sizes to fit to each other, preferably they have complementary shapes. Likewise, the projections 27i in the left surface 27h and the concavities 27k in the right surface 27j are formed with the sizes to fit each other, preferably they have complementary shapes.

The projections 27e and 27i and the concavities 27g and 27k can be formed in any of the top, bottom, left, and right surfaces as long as the blocks 27 can be fitted to each other in some direction to form a integrated solid body.

The blocks 27 are made of a thermoplastic resin material by molding. The resin material can be selected from polystyrene resin (PS), AS resin (AS), ABS resin (ABS), ACS resin (ACS), polycarbonate resin (PC), polyamide resin (PA), and acetal resin (POM).

The frame cover 29 is made of a hard material including the above-mentioned resin materials and metals. The frame cover holds and prevents the blocks from collapsing, and also protects the blocks from damage due to any shock. Flexible material such as rubber can be alternatively used for the frame cover 29.

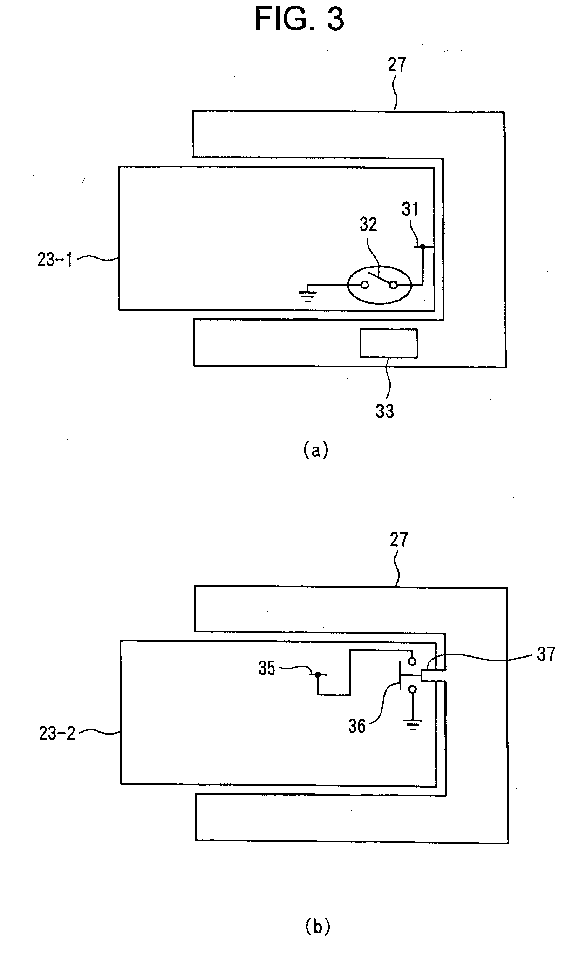

Advantageously, a block 27 is provided with a means for switching off the power supply of a dosimeter inserted into the housing space 27c as shown in Fig. 3.

One type of a dosimeter 23-1, schematically shown in Fig. 3(a), is provided with a reed switch 32 embedded in a side of the dosimeter for turning a power supply 31 ON/OFF. A block for accommodating this type of a dosimeter is provided with a magnet 33 embedded in a side wall of the block for turning the reed switch 32 OFF by magnetic flux generated by the magnet. The magnet 33 is embedded in that one of top, bottom, left, and right walls that corresponds to the location of the reed switch 32.

Another type of a dosimeter 23-2, schematically shown in Fig. 3(b), is provided with a switch 36 of a mechanical contact type embedded in the tip of the dosimeter for turning a power supply 35 ON/OFF. The dosimeter 23-2 has a through-hole formed on an extension line of a moving contact of the switch 36. A block 27 for accommodating this type of a dosimeter is provided with a small projecting bar 37 that enters through the through-hole and pushes the movable contact to turn the switch 36 OFF.

Manufacturing an example of a rack 21 for housing dosimeters using the blocks 27 that have the above-described structure will be described below. This example of a rack 21 is of a wall mounted or a wall hanging type that houses 50 dosimeters 23. First, a number (50 in this case) of blocks 27 are prepared corresponding to the number of dosimeters to be housed. Then, the 50 blocks 27 are assembled arranging ten in the vertical direction and five in the horizontal direction to suit the installation location. The projection 27e of a block 27 is fitted into the concavity 27g of the block adjacent in the vertical direction, and the projection 27i of a block 27 is fitted into the concavity 27k of the block adjacent in the horizontal direction. Thus, the 50 blocks 27 are assembled to form an integrated body having an overall shape of a rectangular solid. The assembled body is covered and fastened with a frame cover 29 on the top, bottom, left, and right surfaces of the body. Thus, a rack 21 is completed.

The rack 21 after completion is mounted and fixed on a wall at a required location in the workshop. A worker inserts a dosimeter 23 through an entry 27a into a housing space 27c in the rack 21 or he takes a dosimeter out. On the insertion, the reed switch 32 or the switch 36, respectively, of the dosimeter 23 is turned OFF by the magnet 33 or the projecting bar 37, as described previously.

It is to be noted that depending on the available space at the location where the rack 21 is to be mounted, block 27 may be arranged either in a two-dimensional matrix as explained above or a one-dimensional matrix along either the horizontal or the vertical direction. Furthermore, an adhesive agent can be used in the fitting process for bonding the blocks one to another. In that case, a rack 21 having an adhered and integrated body can be constructed without using a frame cover 29.

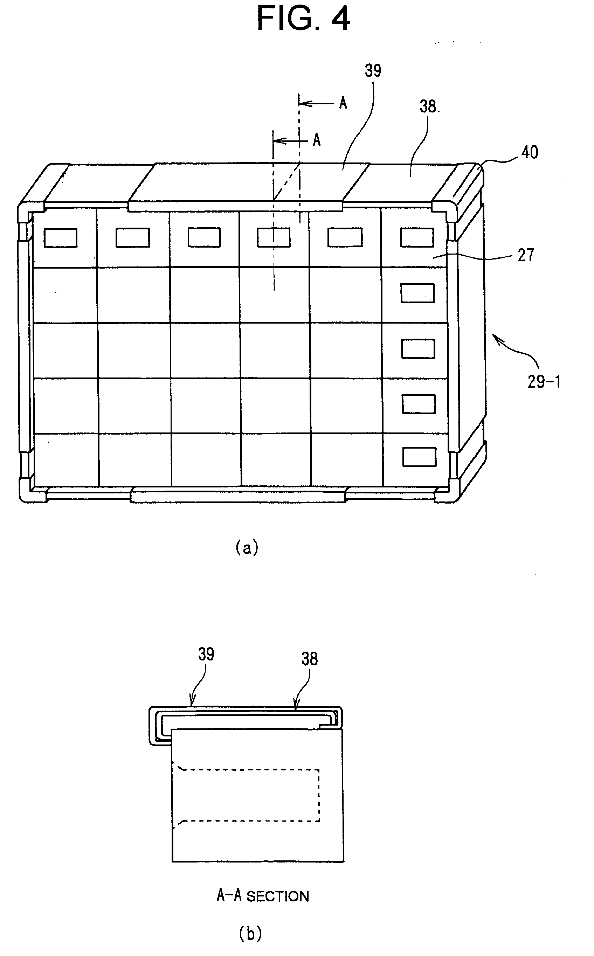

Figs. 4(a) and (b) show a frame cover of a different structure. The size of the frame cover 29-1 in Figs. 4(a) and (b) can be freely changed the size in the vertical and/or the horizontal direction.

Each of the four sides of the rectangular or square shaped frame cover comprises two slide plates 38 that are arranged lengthwise and have their facing ends inserted into a respective guide plate 39 having a U-shaped cross-section. By sliding one or both slide plates so as to increase or decrease the respective overlap with the guide plate 39 the length of the respective side of the frame cover can be easily changed. At each of the four corners of the frame cover is provided a respective joining member 40 having an L-shape. The joining member 40 connects the ends of the respective slide plates of two sides of the frame cover that meet at a respective corner. After being adjusted to a desired size, the slide plates 38 and the guide 39 are fixed to become unslidable using a fixing means not shown in Figs. 4(a) and (b).

The frame cover 29-1 is adjusted and pressed on the peripheral side faces of the rectangular body formed by the arrangement of combined blocks 27. Then, the slide plates 38 and the guide plates are fixed to fasten the blocks 27 integrally. Accordingly, the same type of frame cover can be used for a smaller or larger number of blocks and, hence, a smaller or larger size of the rack.

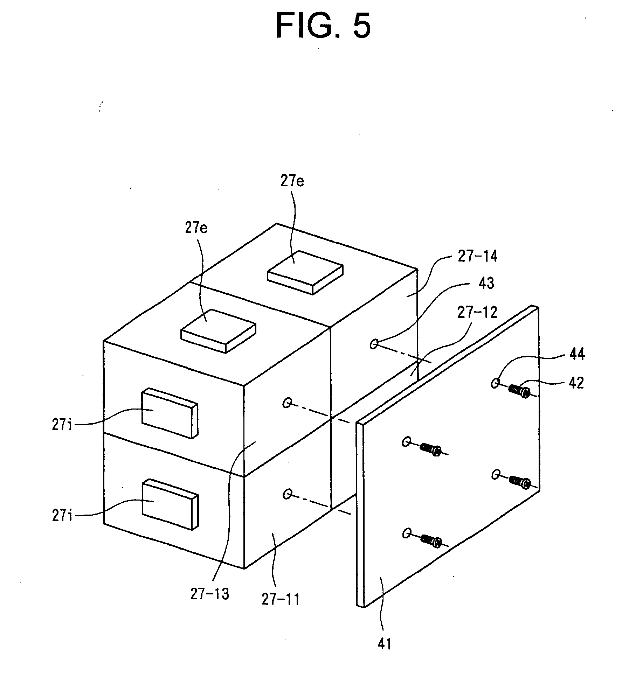

Next, referring to Fig. 5, a description will be made on a joining plate 41 that integrally fastens a structure consisting of a small number of blocks 27.

Four blocks 27-11 through 27-14 for example, can be fixed by putting a square joining plate 41 on the rear surfaces of the blocks and fastening it by screws 42 instead of using a frame cover 29. A tapped hole 43 is formed at the center of the rear surface of each of the blocks 27-11 through 27-14. In the joining plate 41, tapped holes or through holes 44 are formed at the positions corresponding to the tapped holes 43 in the rear surface of the blocks. Pins can be used instead of screws 42, where tapped holes 43 and 44 are replaced by pinning holes.

The peripheral surfaces of the combined body of the blocks 27-11 through 27-14 can also be bound by a belt of a flexible and elastic material such as rubber.

By integrally fastening the blocks 27-11 through 27-14 by means of one of the above-described methods, a rack for housing dosimeters can be manufactured easily and at a low cost in the case of a small number of blocks to be combined or in the case of temporary need for a rack.

### First Variation

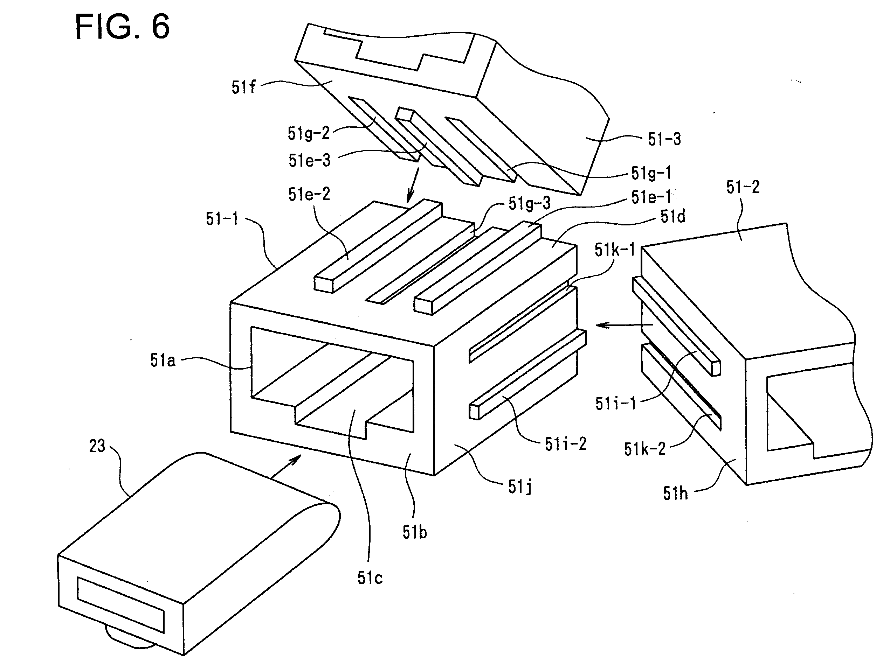

Fig. 6 shows the structure of a first variation of the blocks to be assembled in a rack for housing dosimeters. The differences of the blocks 51-1 through 51-3 in Fig. 6 from the blocks 27-1 through 27-3 in Fig. 2 will be described below. Where a distinction between the blocks 51-1 through 51-3 is not necessary they will each collectively be referred to as block 51.

A block 51 is provided with an entry 51a in a front surface 51b for inserting a dosimeter 23 and housing in a hollow housing space 51 c. On a top surface 51 d, two bar like projections 51e-1 and 51e-2 having square shaped cross section are formed parallel with each other from a position near the front surface to the edge of the rear surface. Between the projections 51e-1 and 51e-2, a concavity 51 g-3 is formed, in the form of a groove having the same dimensions as of the projections 51 e-1 and 51 e-2, preferably the groove has a shape complementary to that of a bar projection 51 e-1 or 51 e-2.

On the bottom surface 51 of the block 51, two concavities 51 g-1 and 51 g-2 having the same shape as the concavity 51 g-3 are formed in parallel with each other from a position near the front surface to the edge of the rear surface. Between the concavities 51 g-1 and 51 g-2, a projection 51e-3 having the same shape as the projections 51 e-1 and 51 e-2 is formed.

On a left side surface 51h of the block 51, a projection 51i-1 having the same shape as the projection 51e-1 and a concavity 51 k-2 having the same shape as the concavity 51 g-3 are formed parallel with each other from a position near the front surface to the edge of the rear surface.

On a right side surface 51j of the block 51, a concavity 51 k-1 having the same shape as the concavity 51 k-2 and a projection 51i-2 having the same shape as the projection 51 i-1 are formed in parallel with each other from a position near the front surface to the edge of the rear surface.

The two projections 51e-1 and 51 e-2 on the top surface 51d of the block 51-1 arranged below the block 51-3 fit into the two concavities 51g-1 and 51g-2 on the bottom surface 51 of the block 51-3. Correspondingly, the projection 51e-3 on the bottom surface 51f of the block 51-3 fits into the concavity 51 g-3 on the top surface 51 d of the block 51-1.

The projection 51i-2 on the right side surface 51j of the block 51-1 fits into the concavity 51k-2 on the left side surface 51 h of the adjacent block 51-2 arranged on the right side of the block 51-1. The projection 51i-1 on the left side surface 51 of the block 51-2 fits into the concavity 51 k-1 on the right side surface 51 j of the block 51-1.

A block 51 in Fig. 6 has the projections 51e-1 through 51 e-3, 51i-1, and 51i-2, and the concavities 51 g-1 through 51 g-3, 51 k-1, and 51 k-2. However, a surface of a block 51 can have any number of projections and concavities as long as the surface has at least one pair of a projection and a concavity formed in parallel with each other, and blocks 51 can be fitted vertically and horizontally to combine integrally. The projections 51 e-1 through 51 e-3, 51 i-1, and 51 i-2, and the concavities 51 g-1 through 51 g-3, 51 k-1, and 51 k-2 can extend from the edge of the front surface rather than from a position near the front surface, to the edge of the rear surface formed in parallel with each other.

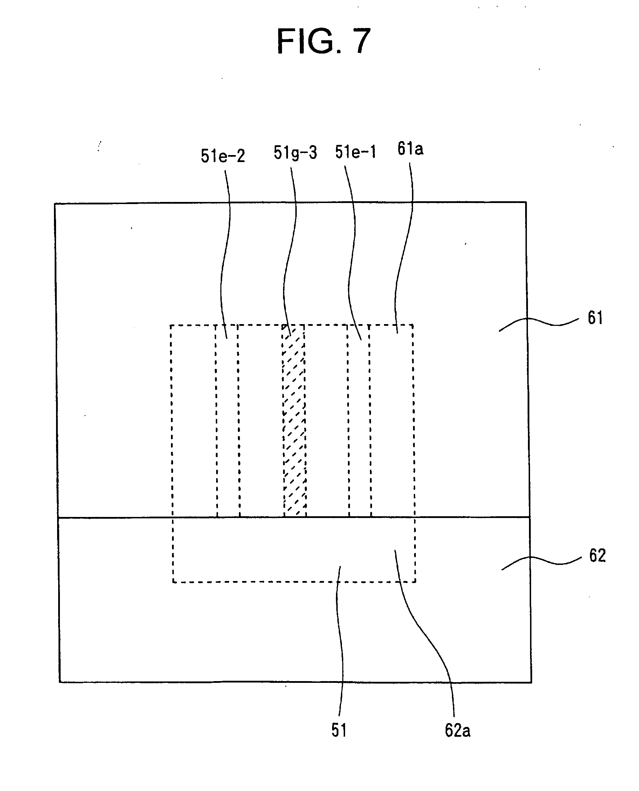

The projections 51 e-1 through 51 e-3, 51 i-1, and 51 i-2 and the concavities 51 g-1 through 51 g-3, 51 k-1, and 51 k-2 can be formed integrally with the main body of the block 51 by using a pair of dies 61 and 62 as shown in Fig. 7.

The die 61 is provided with a cavity 61 a for integrally forming the projections 51e-1 through 51e-3, 51 i-1, and 51 i-2, and concavities 51 g-1 through 51 g-3, 51 k-1, and 51 k-2. The die 62 of the pair is provided with a cavity 62a for forming parts of the block 51 other than the parts that are formed using the die 61.

A block 51 is formed using the dies 61 and 62 as follows. First, a resin material selected from the resins mentioned previously is poured through a through hole (not shown) leading into the cavities 61 a and 62a of the dies 61 and 62. Then, after completion of curing the resin, the dies 61 and 62 are pulled along backward and forward two directions to taking out the block 51.

The block 51 of the first variation requires only two dies 61 and 62 that can easily be disassembled by pulling them apart. In contrast to this, a block 27 needs a separate die for each of its six sides and the six dies need to be pulled away each in a different direction for disassembling the dies. Therefore, the costs for manufacturing dies in case of the first variation are lower than those in the case of the block 27 shown in Fig. 2. Furthermore, since the dies 61 and 62 are disassembled in only two directions, man-hour for manufacturing the blocks is lowered in comparison with the case of the block 27, and manufacturing cost of block 51 is reduced.

### Second Variation

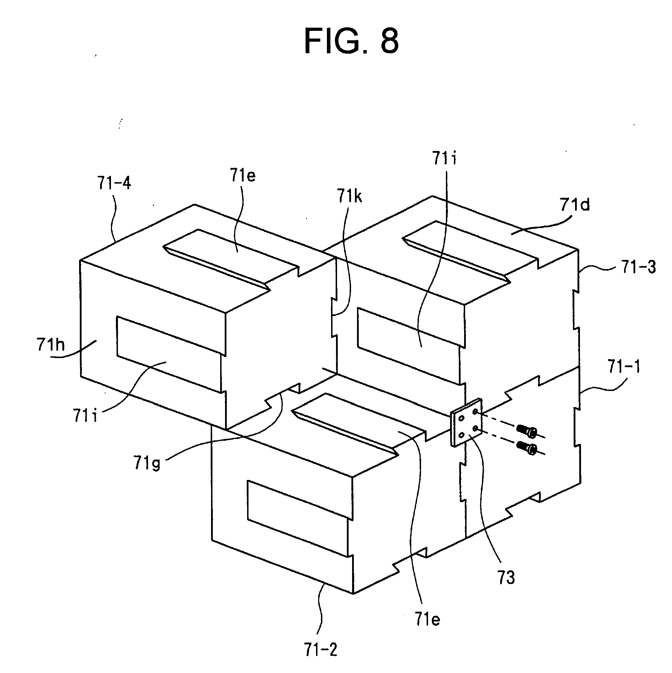

Fig. 8 shows the structure of a second variation of the blocks to be assembled in a rack for housing dosimeters. The differences between the blocks 71-1 through 71-4 in Fig. 8 and the blocks 27-1 through 27-3 in Fig. 2 will be described below. Where a distinction between the blocks 71-1 through 71-4 is not necessary they will each collectively be referred to as block 71.

The blocks 71-1 through 71-4 in Fig. 8, unlike those in Fig. 2, are drawn as seen from the rear side. As a result, an entry and a housing space for a dosimeter in the blocks 71 are invisible in Fig. 8.

On the top surfaces and left side surfaces of the blocks 71-1 through 71-4 in Fig. 8, long and narrow projections 71e and 71 i having a trapezoidal (dovetail) cross-section are formed. On the bottom surfaces and the right side surfaces, concavities 71 g and 71k are formed that have the same cross-sectional dimensions as the projections 71e and 71i to engage with the projections 71e and 71i of respective adjacent blocks. All the projections 71e and 71i and the concavities 71g and 71k are formed in parallel with each other from a position near the front surface to the edge of the rear surface.

The number of projections and concavities on the surfaces of the blocks 71-1 through 71-4 is not limited to that shown in Fig. 8. Instead, a surface of a block can have any number of projections and concavities as long as the projections and the concavities are formed in parallel with each other and the blocks 71 can be engaged vertically and horizontally to combine integrally. The projections 71 e and 71i and concavities 71 g and 71k can extend from the edge of the front surface, rather than from a position near the front surface, to the edge of the rear surface formed in parallel with each other.

In this structure of a block 71 of the second variation, the projection 71e of the block 71-2 and the projection 71i of the block 71-3 are thrusted into and engaged with the concavity 71g and the concavity 71 k, respectively, of the adjacent block 71-4. By engaging the blocks 71 in this way, the blocks 71 are more firmly combined than in the cases of the blocks 27 in Fig. 2 and the blocks 51 in Fig. 6.

While capable of being firmly combined, the blocks 71 can be further tightly joined by using a small square fitting 73 and screwing as shown in Fig. 8. The fitting 73 can have a minimum size necessary for fasten the four blocks 71-1 through 71-4 with screws at the central region of a structure consisting of four combined blocks. Minimum size of the fittings makes the material cost low.

A fitting 73 can be used to fasten only two or three blocks. Two or more fittings 73 can fasten the whole structure consisting of four or more blocks.

The blocks 71 can also be manufactured using one pair of dies like the dies shown in Fig. 7. Therefore, the costs for manufacturing the dies is lower than in the case of the blocks 27 of Fig. 2 and manufacturing cost of the blocks 71 is lower, too.

### Second Embodiment

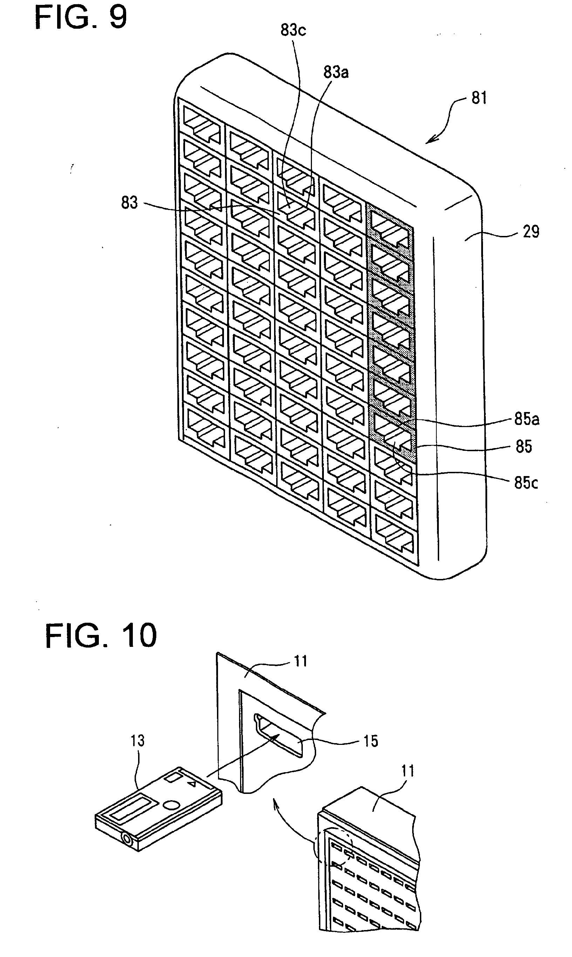

Fig. 9 shows a structure of a rack for housing dosimeters according to a second embodiment of the invention.

The rack 81 of Fig. 9 is different from the rack 21 shown in Fig. 1 in that the rack 81 is constructed by combining two types of blocks: the blocks 83 and the blocks 85, which have different sizes of housing spaces 83c and 85c (hereinafter, the size is also called a housing size) but have the same external dimensions. That is, the size of the housing space 83c of the block 83 is different from the size of the housing space 85c of the block 85. The rack 81 is employed for housing two types of dosimeters having different sizes. Sizes of entry 83a and entry 85a of dosimeters can be either identical or different.

Since the block 83 and the block 85 have the same external dimensions in spite of different housing sizes, the blocks can be combined without taking the difference of housing size into consideration. Therefore, a rack 81 that is suited to the number of dosimeters to be accommodated and to the installation location of the rack can be manufactured at a low cost.

The housing sizes of the blocks are two in the above example. However, a rack comprising blocks having three or more different housing sizes can be constructed as well provided the blocks have the same external size.

Advantageously, the difference in housing size is identified by color to improve visibility on housing dosimeters. The color identification can be made for example, by painting a front surface of the block or using colored resin for the bulk of blocks corresponding to each housing size.

The structure of the blocks 83 and 85 employed in the second embodiment may be the same as that of the blocks 27 in Fig. 2, that of the blocks 51 in Fig. 6 or that of the blocks 71 in Fig. 8. Furthermore, the frame cover 29 and/or any other of the means described in the context of the first embodiment for holding together the blocks assembled to a rack may also be the same.

Since a rack 21 (81) can be constructed only by combining vertically and/or horizontally a desired number of blocks 27(51, 71, 83, 85) each housing one dosimeter 23, a rack is easily manufactured corresponding to the number of dosimeters 23 required to be accommodated. A rack 21(81) having a desired vertically or horizontally oblong shape can be easily manufactured corresponding to the installation location of the rack. Since a rack is manufactured only by combining blocks that are manufactured at a low cost, the rack itself can be manufactured at a low cost and yet match the number of dosimeters to be accommodated and the installation location of the rack.

When a dosimeter 23 contains a (normally closed) reed switch that turns on the power supply of the dosimeter and can be turned off by sensing a magnetic flux, a block accommodating the dosimeter is preferably provided with a magnet within a wall of the block to turn the reed switch off whenever the dosimeter is accommodated in the block. When a dosimeter 23 contains a (normally closed) mechanically operated switch that turns the power supply of the dosimeter on, a block 27 accommodating the dosimeter is preferably provided with a switch operating bar projecting from a wall into the housing space of the block for mechanically turning the dosimeter's switch off.

These types of blocks, on receiving a dosimeter in the housing space, automatically switch the power supply of the dosimeter off.

A frame cover covers the outer peripheral surfaces of a rectangular body constructed by combining a plurality of blocks. By covering the combined blocks by a frame cover, the blocks are fastened integrally and prevented from collapsing. When the frame cover is made of a hard material including resins or metals, the combined blocks are protected from damage due to any shock.

As described in detail above, the present invention provides a device for housing at least one dosimeter, comprising a block (27; 51; 71) having a rectangular parallelepipedic outer shape with a front surface (27b; 51b), a rear surface, a first, a second, a third and a fourth side surface, wherein the first and the second surfaces are parallel and opposite to each other, and the third and the fourth surface are parallel and opposite to each other and a housing space (27c; 51 c; 83c, 85c) is provided inside the block (27; 51; 71). An entry opening (27a; 51 a; 83a, 85a) is formed in the front surface (27b; 51 b) and connected to the housing space (27c; 51 c; 83c, 85c). At least one first projection (27e; 51e-1, 51e-2; 71e) is formed on the first surface (27d; 51 d; 71d) and a substantially complementary first recess (27g; 51g-1, 51 g-2; 71 g) is formed in the second surface (27f; 51 f) at a position corresponding to the orthogonal projection of the first projection (27e; 51e-1, 51e-2; 71e) onto the second surface (27f; 51f). At least one second projection (27i; 51 i-1; 71 is formed on the third surface (27h; 51 h; 71 h) and a substantially complementary second recess (27k; 51 k-1; 71 k) is formed in the fourth surface (27j; 51j) at a position corresponding to the orthogonal projection of the second projection (27i; 51i-1; 71 i) onto the fourth surface (27j; 51j).

In a preferred embodiment the device includes a plurality of the blocks (27; 51; 71; 83, 85) arranged in a one-dimensional or two-dimensional matrix, wherein the at least one first projection (27e; 51e-1, 51e-2; 71e) of a respective block (27-1; 51-1; 71-1) is engaged with the at least one first recess (27g; 51g-1, 51g-2; 71g) of the block (27-3; 51-3; 71-3), if any, immediately adjacent the first side of the respective block (27-1; 51-1; 71-1), the at least one second projection (27i; 51i-1; 71 i) of said respective block (27-1; 51-1; 71-1) is engaged with the at least one second recess (27k; 51 k-1; 71 k) of the block (71-2), if any, immediately adjacent the third side of the respective block (27-1; 51-1; 71 - 1), the at least one first recess (27g; 51 g-1, 51 g-2; 71g) of the respective block (27-1; 51-1; 71-1) is engaged with the at least one first projection (27e; 51 e-1, 51e-2; 71 e) of the block, if any, immediately adjacent the second side of the respective block (27; 51; 71), and the at least one second recess (27k; 51k-1; 71k) of the respective block (27-1; 51-1; 71-1) is engaged with the at least one second projection (27i; 51i-1; 71 i) of the block (27-2; 51-2), if any, immediately adjacent the fourth side of the respective block (27; 51; 71).

In another embodiment, one or more of the first and the third surfaces have formed x projections and y recesses, in which case the second and/or the fourth surface, respectively, has a complementary structure of x recesses and y projections where x and y each is an integer equal to or larger than zero with x+y being equal to or larger than 1.

In still another embodiment at least one projection (71e, 71i) on the first and/or the third surface (71 d, 71 h) and the mating recess (71 g, 71 k) in the second and/or fourth surface, respectively, have a shape, such as a dovetail shape, that allows the projection and the recess to be engaged with each other by relative movement of the respective pair of blocks in a predetermined direction while preventing disengagement of the engaged projection and recess in one or more directions other than said predetermined direction.

## Claims

1. A rack for housing dosimeters comprising
a plurality of blocks (27; 51; 71; 83, 85) having an external shape of rectangular solid, each block (27; 51; 71; 83, 85) being provided with a housing space (27c; 51 c; 83c, 85c) for housing a dosimeter and an entry opened in a front surface (27b, 51 b) of the block (27; 51; 71; 83, 85) for inserting the dosimeter into the housing space, and
at least one of a projection and a concavity adapted to fit into each other, on at least one of a top, a bottom, a left, and a right external surface of the block (27; 51; 71; 83, 85);
wherein the plurality of blocks (27; 51; 71; 83, 85) are combined in at least one of a vertical and a horizontal direction by engaging the projection and the concavity on facing surfaces of adjacent blocks (27; 51; 71; 83, 85) with each other.

2. The rack according to claim 1, wherein one or more of the blocks (27) comprise a magnet (33) embedded in a wall of the block (27), the magnet (33) being adapted to switch off a magnetically operable power switch (32) in the dosimeter.

3. The rack according to claim 1, wherein some or more of the blocks (27) comprise a switching means in the housing space (27c), the switching means being adapted to turn off a mechanically operated power switch of the dosimeter.

4. The rack according to any one of claims 1 through 3, wherein each block (51) comprises at least one pair of bar-shaped projections (51 e-1, 51 e-2) and a concavity (51 g-3) formed on at least one of the external surfaces so as to extend in parallel with each other in a direction connecting the front surface (51 b) and a rear surface of the block (51), the concavity having a shape fitting to that of any of the projections.

5. The rack according to any one of the preceding claims, wherein said at least one projection (71 e, 71 i) and the corresponding concavity in the facing surfaces of adjacent blocks (71-1 to 71-4) are shaped so as to allow them to be engaged and disengaged with each other by relative movement of the blocks in a predetermined direction while preventing engagement and disengagement in one or more other directions.

6. The rack according to any one of claims 1 through 5 comprising a plurality of different types of blocks (83, 85), wherein all blocks have the same external dimensions but the blocks (83) of one of the types have dimensions of the housing space (83c) different from those of the housing space (85c) of the blocks (85) of any other type.

7. The rack according to claim 6, wherein each type of block (27; 51; 71; 83, 85) has a respective specific color identification.

8. The rack according to any one of claims 1 through 7 further comprising a cover (29) that covers outer peripheral surfaces of the structure composed of the combined blocks (27; 51; 71; 83, 85).

9. The rack according to claim 8, wherein the cover (29) comprises
a plurality of sets composed of two slide plates (38) arranged lengthwise and a guide plate (39) engaged with the slide plates so as to slide relative to each other;
a plurality of connection members (40) that fix corners of a frame-like structure composed by arranging the sets; and
a plurality of fixing members that fixes the slide plates and the guide plate in the frame-like structure relatively unslidable.

10. A rack according to any one of claims 1 through 9 further comprising at least one joining plate (41) that is put on rear surfaces of two or more of the blocks (27-11 to 27-14) and fixed to these blocks by screws (42) or pins.

11. A block having an external shape of rectangular solid for use in a rack as defined in claim 1, comprising:
a housing space (27c; 51 c; 83c, 85c) for housing a dosimeter;
an entry opened in a front surface (27b; 51 b) of the block (27; 51; 71; 83, 85) for inserting the dosimeter into the housing space, and
at least one of a projection and a concavity adapted to fit into each other, on at least one of a top, a bottom, a left, and a right external surface of the block (27; 51; 71; 83, 85).

12. The block according to claim 11 further comprising a magnet (33) embedded in a wall of the block (27), the magnet (33) being adapted to switch off a magnetically operable power switch (32) in the dosimeter.

13. The block according to claim 11 further comprising a switching means in the housing space (27c) of the block (27), the switching means being adapted to turn off a mechanically operated power switch of the dosimeter.

14. The block according to any one of claims 11 through 13 comprising at least one pair of bar-shaped projections (51 e-1, 51 e-2) and a concavity (51 g-3) formed on at least one of the external surfaces so as to extend in parallel with each other in a direction connecting the front surface (51 b) and a rear surface of the block (51), the concavity having a shape fitting to that of any of the projections.

15. The block according to any one of claims 11 through 14, wherein said at least one projection (71 e, 71 i) and the corresponding concavity in the facing surfaces of adjacent blocks (71-1 to 71-4) are shaped so as to allow them to be engaged and disengaged with each other by relative movement of the blocks in a predetermined direction while preventing engagement and disengagement in one or more other directions.
